# EUROPEAN PATENT APPLICATION

(11) **EP 4 336 723 A1**
(43) Date of publication of application: **13.03.2024**
(21) Application number: 22810162.2
(22) Date of filing: 24.03.2022
(51) Int. Cl.: H02M 7/42, H02J 3/38, H02S 40/32

(54) **PHOTOVOLTAIC POWER GENERATION SYSTEM AND CONVERSION CIRCUIT**

(30) Priority: 27.05.2021 CN 202110587013
(71) Applicant: Huawei Digital Power Technologies Co., Ltd., Shenzhen, Guangdong 518043 (CN)
(72) Inventor: CHEN, Dong, Shenzhen, Guangdong 518043 (CN); ZHANG, Yanzhong, Shenzhen, Guangdong 518043 (CN); GAO, Yongbing, Shenzhen, Guangdong 518043 (CN); SHI, Lei, Shenzhen, Guangdong 518043 (CN)
(74) Representative: Maiwald GmbH
(86) International application number: PCT/CN2022/082819
(87) International publication number: WO 2022/247428

(57) **Abstract**

Embodiments of this application provide a photovoltaic power generation system and a conversion circuit. Two groups of photovoltaic arrays are cascaded by using the conversion circuit disposed in the photovoltaic power generation system, to effectively increase an input voltage of a DC/AC conversion circuit. In this way, a cable with an existing diameter specification can improve current transmission in the photovoltaic power generation system, to effectively reduce costs of the photovoltaic power generation system. A voltage to earth at an intermediate node in the conversion circuit is adjusted to a first preset value, so that both an absolute value of a voltage to earth of a first group of photovoltaic arrays and an absolute value of a voltage to earth of a second group of photovoltaic arrays are less than a first threshold. In this way, the photovoltaic power generation system can use a power distribution component with an existing voltage withstanding specification, to further reduce costs of the photovoltaic power generation system.

## Description

### CROSS-REFERENCE TO RELATED APPLICATION

This application claims priority to Chinese Patent Application No. 202110587013.3, filed with the China National Intellectual Property Administration on May 27, 2021 and entitled "PHOTOVOLTAIC POWER GENERATION SYSTEM AND CONVERSION CIRCUIT", which is incorporated herein by reference in its entirety.

### TECHNICAL FIELD

This application relates to the field of electronic technologies, and in particular, to a photovoltaic power generation system and a conversion circuit.

### BACKGROUND

A solar photovoltaic (photovoltaic, PV) power generation technology is a type of low-carbon, environment friendly, and green energy technology, and is being more widely used currently. Usually, the solar photovoltaic power generation technology may be implemented by using a photovoltaic power generation system. Generally, the photovoltaic power generation system mainly includes a photovoltaic array and an inverter. The inverter is configured to convert a direct-current voltage generated by the photovoltaic array to obtain a grid-connected voltage. Therefore, an architecture of the inverter has a large impact on benefits of the photovoltaic power generation system.

Currently, common inverter architectures include a centralized inverter, a distributed inverter, and a central-distributed inverter. Conversion power of the centralized inverter and that of the central-distributed inverter are large, and conversion power of the distributed inverter is smaller than that of the centralized inverter and that of the central-distributed inverter. If the conversion power of the inverter is increased, and an input voltage and an output voltage are low, an input current and an output current of the inverter are high. As a result, a through-current capability of an existing direct-current/alternating-current cable cannot meet a transmission requirement of the current. Therefore, a direct-current/alternating-current cable with a larger diameter specification is required, which increases material costs of the photovoltaic power generation system.

To avoid using a direct-current/alternating-current cable with a larger diameter specification instead, it is proposed in some technical solutions that, the input voltage of the inverter is increased to reduce costs of the photovoltaic power generation system. However, when only the input voltage of the inverter is increased, a power distribution component with a large voltage withstanding specification is required to meet transmission of the input voltage of the inverter. In addition, when a power distribution component with a larger voltage withstanding specification is used instead, material costs of the photovoltaic power generation system are still increased.

### SUMMARY

This application provides a photovoltaic power generation system and a conversion circuit, to reduce material costs of the photovoltaic power generation system, thereby increasing benefits of the photovoltaic power generation system.

According to a first aspect, an embodiment of this application provides a photovoltaic power generation system.

For example, the photovoltaic power generation system may include a conversion circuit and a direct-current to alternating-current DC/AC conversion circuit. The conversion circuit includes a first node, a second node, and an intermediate node, the first node is coupled to a positive input terminal of the direct-current to alternating-current conversion circuit, and the second node is coupled to a negative input terminal of the DC/AC conversion circuit. The photovoltaic power generation system further includes a first group of photovoltaic arrays and a second group of photovoltaic arrays. The first group of photovoltaic arrays includes at least one first photovoltaic array, and the second group of photovoltaic arrays includes at least one second photovoltaic array. Positive terminals of the first photovoltaic arrays are mutually coupled to the first node, negative terminals of the first photovoltaic arrays are mutually coupled to the intermediate node, positive terminals of the second photovoltaic arrays are mutually coupled to the intermediate node, and negative terminals of the second photovoltaic arrays are mutually coupled to the second node. In this way, when determining that a voltage to earth at the intermediate node is not within a first preset range, the conversion circuit can adjust the voltage to earth at the intermediate node to a first preset value, so that an absolute value of a voltage to earth of the first group of photovoltaic arrays is less than a first threshold, and an absolute value of a voltage to earth of the second group of photovoltaic arrays is less than the first threshold. In addition, the conversion circuit may further transfer an output voltage of the first group of photovoltaic arrays and/or an output voltage of the second group of photovoltaic arrays to the DC/AC conversion circuit, so that the DC/AC conversion circuit can further convert the output voltage to obtain an alternating-current voltage and output the alternating-current voltage to a load connected to the photovoltaic power generation system.

In this embodiment of this application, two groups of photovoltaic arrays are cascaded by using the conversion circuit disposed in the photovoltaic power generation system, to effectively increase an input voltage of the DC/AC conversion circuit, so that a cable with an existing diameter specification can meet current transmission in the photovoltaic power generation system, thereby effectively reducing costs of the photovoltaic power generation system. The voltage to earth at the intermediate node in the conversion circuit is adjusted to the first preset value, so that both the absolute value of the voltage to earth of the first group of photovoltaic arrays and the absolute value of the voltage to earth of the second group of photovoltaic arrays are less than the first threshold. Therefore, the photovoltaic power generation system can use a power distribution component (cable) with an existing voltage withstanding specification, thereby further reducing costs of the photovoltaic power generation system.

In a possible design, the first preset value may be within the first preset range. In this design, the first preset value is set to be within the first preset range, so that the adjusted voltage to earth at the intermediate node is stable, thereby effectively decreasing a quantity of voltage adjustments.

In a possible design, the conversion circuit further includes an adjustable power supply. A first terminal of the adjustable power supply is connected to the intermediate node, and a second terminal is connected to a ground wire. In this way, when determining that the voltage to earth at the intermediate node is not within the first preset range, the adjustable power supply can adjust the voltage to earth at the intermediate node to the first preset value, so that the absolute value of the voltage to earth of the first group of photovoltaic arrays is less than the first threshold, and the absolute value of the voltage to earth of the second group of photovoltaic arrays is less than the first threshold.

In this design, the voltage to earth at the intermediate node is adjusted by using the adjustable power supply in the conversion circuit, to effectively improve voltage adjustment efficiency, thereby more effectively ensuring normal running of the photovoltaic power generation system.

In a possible design, the conversion circuit further includes a first residual current detection RCD circuit, and the first RCD circuit is coupled to the first node and the second node, so that the first RCD circuit can detect a first residual current of the conversion circuit. In this way, when determining that the first residual current is not within a second preset range, the adjustable power supply can adjust the voltage to earth at the intermediate node to the first preset value.

In this design, through detection of the first RCD circuit, when a residual current at an output terminal of the conversion circuit is not within the second preset range, the adjustable power supply may also adjust the voltage to earth at the intermediate node, to effectively ensure stable grounding of the photovoltaic power generation system to avoid fault diffusion, thereby more effectively enabling the photovoltaic power generation system 200 to run safely.

In a possible design, the conversion circuit further includes a second RCD circuit and a third RCD circuit. The second RCD circuit is coupled to the first node and the negative terminal of each first photovoltaic array, and the third RCD circuit is coupled to the positive terminal of each second photovoltaic array and the second node, so that the second RCD circuit can be configured to detect a second residual current of the first group of photovoltaic arrays, and the third RCD circuit can be configured to detect a third residual current of the second group of photovoltaic arrays. In this way, when determining that the second residual current or the third residual current is not within a third preset range, the adjustable power supply can adjust the voltage to earth at the intermediate node to the first preset value.

In this design, one RCD circuit is added for each group of photovoltaic arrays, and a residual circuit of each group of photovoltaic arrays may be separately detected. In this way, when a residual current of any group of photovoltaic arrays is not within the third preset range, the voltage to earth at the intermediate node can be automatically adjusted, thereby more effectively ensuring stable running of the photovoltaic power generation system and effectively improving a protection capability of the photovoltaic power generation system.

It should be understood that specific values of the first preset range, the second preset range, and the third preset range may be the same or different. This is not specifically limited in this embodiment of this application.

In a possible design, the conversion circuit may further include a potential induced degradation PID switch. A first terminal of the PID switch is connected to the negative terminal of each first photovoltaic array, and a second terminal is connected to the intermediate node and the positive terminal of each second photovoltaic array. In this way, in a preset time period, the adjustable power supply can control the PID switch to be turned off, and adjust a voltage to earth of the positive terminal of each second photovoltaic array to a second preset value, where the preset time period is a time period, for example, from one o'clock to five o'clock at night, in which the first group of photovoltaic arrays and the second group of photovoltaic arrays do not work.

In this design, the adjustable power supply may control the PID switch to be turned off to adjust the voltage to earth of the positive terminal of each second photovoltaic array in the second group of photovoltaic arrays, to increase a voltage to earth of the negative terminal of each second photovoltaic array in the second group of photovoltaic arrays, and repair a PID effect of the second group of photovoltaic arrays, thereby effectively improving a comprehensive energy yield of the photovoltaic power generation system.

In a possible design, the adjustable power supply may further receive a control instruction, and adjust the voltage to earth at the intermediate node to the first preset value in response to the control instruction. The control instruction may be from another external device, for example, a DC/AC circuit. This is not specifically limited in this embodiment of this application.

In this design, the adjustable power supply may receive a control command from another external device to adjust the voltage to earth at the intermediate node. In this way, when another device in the photovoltaic power generation system is faulty, the adjustable power supply can also protect the photovoltaic power generation system, thereby effectively expanding a protection capability of the photovoltaic power generation system.

According to a second aspect, an embodiment of this application provides a conversion circuit, and the conversion circuit includes a first node, a second node, an intermediate node, and an adjustable power supply. The first node is configured to be separately coupled to a positive input terminal of a direct-current to alternating-current DC/AC conversion circuit in a photovoltaic power generation system and a positive terminal of at least one first photovoltaic array in a first group of photovoltaic arrays in the photovoltaic power generation system. The second node is configured to be separately coupled to a negative input terminal of the DC/AC conversion circuit and a negative terminal of at least one second photovoltaic array in a second group of photovoltaic arrays in the photovoltaic power generation system. The intermediate node is configured to be separately coupled to a negative terminal of each first photovoltaic array and a positive terminal of each second photovoltaic array. A first terminal of the adjustable power supply is connected to the intermediate node, and a second terminal is connected to a ground wire. In this way, the adjustable power supply can be configured to adjust a voltage to earth at the intermediate node to a first preset value when determining that the voltage to earth at the intermediate node is not within a first preset range, so that an absolute value of a voltage to earth of the first group of photovoltaic arrays is less than a first threshold, and an absolute value of a voltage to earth of the second group of photovoltaic arrays is less than the first threshold.

In a possible design, the first preset value may be within the first preset range.

In a possible design, the conversion circuit further includes a first RCD circuit, and the first RCD circuit is coupled to the first node and the second node, so that the first RCD circuit can be configured to detect a first residual current of the conversion circuit. The adjustable power supply may be configured to adjust the voltage to earth at the intermediate node to the first preset value when determining that the first residual current is not within a second preset range.

In a possible design, the conversion circuit further includes a second RCD circuit and a third RCD circuit. The second RCD circuit is coupled to the first node and the negative terminal of each first photovoltaic array, and the third RCD circuit is coupled to the positive terminal of each second photovoltaic array and the second node, so that the second RCD circuit can be configured to detect a second residual current of the first group of photovoltaic arrays, and the third RCD circuit can be configured to detect a third residual current of the second group of photovoltaic arrays. In this way, the adjustable power supply can be configured to adjust the voltage to earth at the intermediate node to the first preset value when determining that the second residual current or the third residual current is not within a third preset range.

In a possible design, the conversion circuit further includes a potential induced degradation PID switch. One terminal of the PID switch is configured to connect to the negative terminal of each first photovoltaic array, the other terminal is configured to connect to the positive terminal of each second photovoltaic array, and the other terminal is further connected to the intermediate node. In this way, the adjustable power supply can be configured to: in a preset time period, control the PID switch to be turned off, and increase a voltage to earth of the positive terminal of each second photovoltaic array to a second preset value, where the preset time period is a time period in which the first group of photovoltaic arrays and the second group of photovoltaic arrays do not work.

In a possible design, the adjustable power supply may be further configured to: receive a control instruction, and adjust the voltage to earth at the intermediate node to the first preset value in response to the control instruction.

For specific technical effects that can be achieved in the second aspect and any possible design of the second aspect, refer to descriptions of technical effects brought by any possible design of the first aspect. Details are not described herein again.

In a possible design, the conversion circuit may be integrated into an inverter, a combiner box, or a direct-current converter in the photovoltaic power generation system. In this design, a specific product implementation of the conversion circuit may be an inverter, a combiner box, or a direct-current converter. In this way, product integration of the conversion circuit is effectively improved, so that different manufacturers can design the conversion circuit based on different requirements of the manufacturers.

These aspects or other aspects of this application are more concise and understandable in description of the following embodiments.

### BRIEF DESCRIPTION OF DRAWINGS

FIG. 1 is a schematic diagram of an architecture of a photovoltaic power generation system;
FIG. 2 is a first schematic diagram of a structure of a photovoltaic power generation system according to an embodiment of this application;
FIG. 3 is a schematic diagram of a structure of a photovoltaic array according to an embodiment of this application;
FIG. 4 is a schematic diagram of a possible structure of an alternating-current to direct-current converter according to an embodiment of this application;
FIG. 5 is a second schematic diagram of a structure of a photovoltaic power generation system according to an embodiment of this application;
FIG. 6 is a third schematic diagram of a structure of a photovoltaic power generation system according to an embodiment of this application;
FIG. 7 is a fourth schematic diagram of a structure of a photovoltaic power generation system according to an embodiment of this application;
FIG. 8 is a fifth schematic diagram of a structure of a photovoltaic power generation system according to an embodiment of this application; and
FIG. 9 is a sixth schematic diagram of a structure of a photovoltaic power generation system according to an embodiment of this application.

### DESCRIPTION OF EMBODIMENTS

The following further describes in detail the technical solutions in this application with reference to the accompanying drawings.

It should be noted that in the description of this application, "at least one" means "one or more", and "a plurality of" means two or more. In view of this, in embodiments of this application, "a plurality of" may also be understood as "at least two". In addition, it should be understood that in the description of this application, words such as "first" and "second" are merely used for distinguishing between descriptions, and cannot be understood as an indication or implication of relative importance, or cannot be understood as an indication of implication of an order.

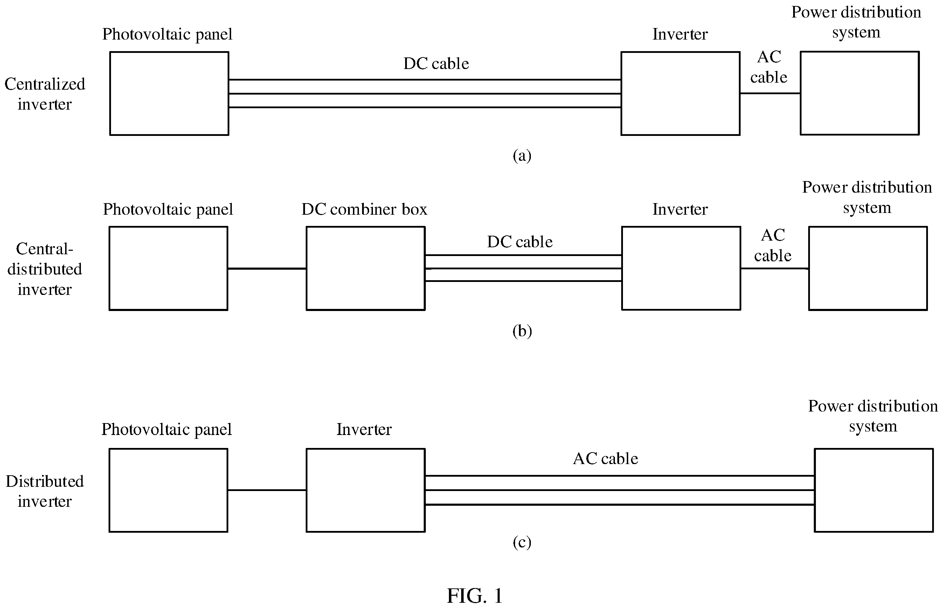

FIG. 1 is a schematic diagram of several common architectures of an inverter in a photovoltaic power generation system. In a centralized inverter solution shown in (a) in FIG. 1, the photovoltaic power generation system includes a photovoltaic panel, an inverter, and a power distribution system. After the photovoltaic panel generates direct currents, the direct currents are aggregated at the inverter after passing through a long DC cable and are converted into alternating currents. After the alternating currents are processed by a box-type transformer substation, grid-connected alternating currents are obtained and transferred to the power distribution system. In this solution, a voltage transmitted in the photovoltaic power generation system is low, and therefore a transmission current is large, which causes large losses of the power distribution component and a line.

In a central-distributed inverter solution shown in (b) in FIG. 1, the photovoltaic power generation system includes a photovoltaic panel, a DC combiner box, an inverter, and a power distribution system. After the photovoltaic panel generates direct currents, the DC combiner box aggregates the currents and transmits the converged direct currents to the inverter through a long DC cable. The inverter converts the converged direct currents into alternating currents. After the alternating currents are processed by a box-type transformer substation, grid-connected alternating currents are obtained and transferred to the power distribution system. In this solution, a voltage transmitted in the photovoltaic power generation system is still low, a transmission current is still large, and a power distribution component needs to be replaced.

In a distributed inverter solution shown in (c) in FIG. 1, the photovoltaic power generation system includes a photovoltaic panel, an inverter, and a power distribution system. Different from the centralized inverter and the central-distributed inverter, in the distributed inverter solution, after generating a direct current, the photovoltaic panel transmits the direct current to the inverter at a short distance, and the inverter converts the direct current into an alternating current. The alternating current is processed by a box-type transformer substation after passing through a long AC cable to obtain a grid-connected alternating current, and the grid-connected alternating current is transmitted to the power distribution system. Compared with power of the centralized inverter and that of a string inverter, conversion power of the distributed inverter is lower. If the conversion power increases, an input current and an output current of the distributed inverter still increase, and a direct-current/alternating-current cable with a large diameter specification is also required to meet a current transmission requirement. As a result, losses of a power distribution component and a line in the photovoltaic power generation system still exist.

In addition, when the photovoltaic power generation system works normally, there is a negative bias voltage between the photovoltaic panel and the ground. As a result, the photovoltaic panel is affected by a potential induced degradation (potential induced degradation, PID) effect, and output power of the photovoltaic panel decreases, which reduces an energy yield of the photovoltaic power generation system.

In view of this, this application provides a photovoltaic power generation system and a conversion circuit, to reduce costs and a loss of a power distribution component in the photovoltaic power generation system, thereby increasing benefits of the photovoltaic power generation system.

To resolve the foregoing problem exists in the photovoltaic power generation system, embodiments of this application provide a plurality of photovoltaic power generation system structures.

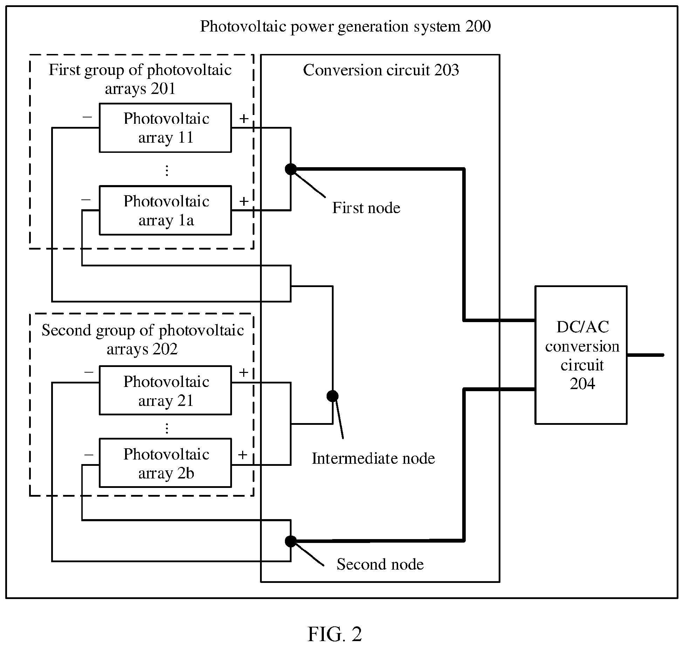

For example, FIG. 2 is a first schematic diagram of an architecture of a photovoltaic power generation system according to an embodiment of this application. As shown in FIG. 2, a photovoltaic power generation system 200 includes a conversion circuit 203 and a DC/AC conversion circuit 204. The conversion circuit 203 includes a first node, a second node, and an intermediate node.

It should be understood that the conversion circuit 203 has a plurality of pairs of first positive input terminals and first negative input terminals, and a plurality of pairs of second positive input terminals and second negative input terminals. The "first node" may be formed by mutually coupling a plurality of first positive input terminals in the conversion circuit, the "second node" may be formed by mutually coupling a plurality of second negative input terminals in the conversion circuit, and the "intermediate node" may be formed by mutually coupling a plurality of first negative input terminals to a plurality of second positive input terminals. A specific coupling manner may include one or more of manners such as indirect connection through a component such as a switch component, a current limiting component, or a protection component, and direct connection through a cable. This is not specifically limited in this embodiment of this application.

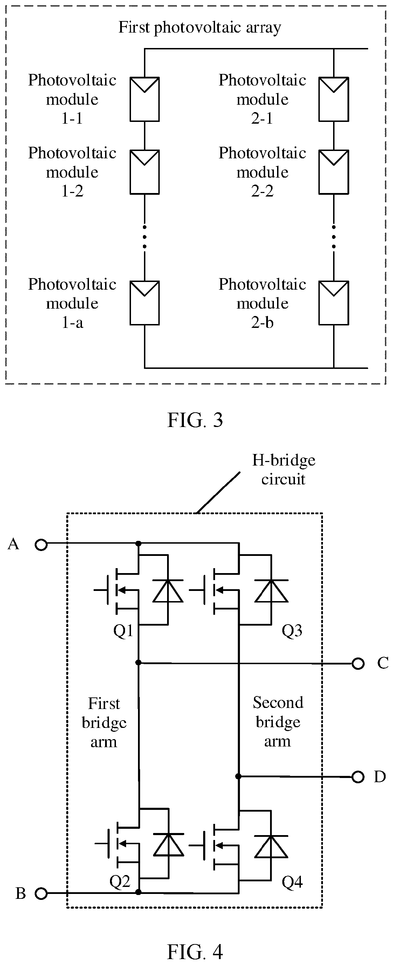

As shown in FIG. 3, the photovoltaic power generation system 200 further includes a first group of photovoltaic arrays 201 and a second group of photovoltaic arrays 202. The first group of photovoltaic arrays 201 may include at least one first photovoltaic array (for example, a photovoltaic array 11, ..., and a photovoltaic array 1a), and the second group of photovoltaic arrays 202 may include at least one second photovoltaic array (for example, a photovoltaic array 21, ..., and a photovoltaic array 2b). Each first photovoltaic array and each second photovoltaic array includes a positive terminal and a negative terminal. Specific values of "a" and "b" may be the same or different. This is not specifically limited in this embodiment of this application.

It should be understood that, because a capability of outputting electric energy by each photovoltaic array is limited, a plurality of photovoltaic arrays are disposed in both the first group of photovoltaic arrays 201 and the second group of photovoltaic arrays 202, so that electric energy output when the plurality of photovoltaic arrays work simultaneously increases, thereby more effectively meeting a requirement of a power grid for electric energy.

In a possible implementation, positive terminals of the first photovoltaic arrays are mutually coupled to the first node, negative terminals of the first photovoltaic arrays are mutually coupled to the intermediate node, positive terminals of the second photovoltaic arrays are mutually coupled to the intermediate node, and negative terminals of the second photovoltaic arrays are mutually coupled to the second node. In other words, the positive terminals of the first photovoltaic arrays are coupled to the first positive input terminals of the conversion circuit 203 in a one-to-one correspondence, the negative terminals of the first photovoltaic arrays are coupled to the first negative input terminals of the conversion circuit 203 in a one-to-one correspondence, the positive terminals of the second photovoltaic arrays are coupled to the second positive input terminals of the conversion circuit 203 in a one-to-one correspondence, and the negative terminals of the second photovoltaic arrays are coupled to the second negative input terminals of the conversion circuit 203 in a one-to-one correspondence. To be specific, the first group of photovoltaic arrays 201 and the second group of photovoltaic arrays 202 may be cascaded by using the circuit nodes in the conversion circuit 203, to effectively increase an input voltage in the photovoltaic power generation system 200, so that an input current becomes smaller, and a cable with a small diameter specification can also meet a current transmission requirement.

For example, positive terminals of the photovoltaic array 11, ..., and the photovoltaic array 1a may be mutually coupled to the first node, negative terminals of the photovoltaic array 11, ..., and the photovoltaic array 1a may be mutually coupled to the intermediate node, positive terminals of the photovoltaic array 21, ..., and the photovoltaic array 2b may be mutually coupled to the intermediate node, and negative terminals of the photovoltaic array 21, ..., and the photovoltaic array 2b may be mutually coupled to the second node.

In a possible implementation, when determining that a voltage to earth at the intermediate node is not within a first preset range, the conversion circuit 203 may adjust the voltage to earth at the intermediate node to a first preset value, so that an absolute value of a voltage to earth of the first group of photovoltaic arrays 201 is less than a first threshold, and an absolute value of a voltage to earth of the second group of photovoltaic arrays 202 is less than the first threshold.

The first preset value may be implemented in a plurality of manners, may be a specific value (for example, 60 V or 70 V), or may be a specific value in the first preset range (from -50 V to +50 V). This is not specifically limited in this embodiment of this application. The first preset value is set to be within the first preset range, so that the adjusted voltage to earth at the intermediate node is stable, thereby effectively decreasing a quantity of voltage adjustments.

For example, the first preset range is from -50 V to +50 V, the first preset value is 0 V, and the first threshold is 1500 V If an output voltage of the first group of photovoltaic arrays 201 is 1450 V, and the voltage to earth at the intermediate node exceeds 50 V, the absolute value of the voltage to earth of the first group of photovoltaic arrays 201 exceeds 1500 V Similarly, if an output voltage of the second group of photovoltaic arrays 202 is 1450 V, and the voltage to earth at the intermediate node is less than -50 V, the absolute value of the voltage to earth of the second group of photovoltaic arrays 202 exceeds 1500 V In this case, the conversion circuit 203 adjusts the voltage to earth at the intermediate node, so that the voltage to earth at the intermediate node is 0 V Therefore, the absolute value of the voltage to earth of the first group of photovoltaic arrays 201 does not exceed 1500 V, and the absolute value of the voltage to earth of the second group of photovoltaic arrays 202 does not exceed 1500 V either. In this way, the photovoltaic power generation system 200 can continue to use a power distribution component with a voltage withstanding specification of 1500 V, and the power distribution component (for example, a cable) does not need to be replaced, thereby effectively reducing material costs of the photovoltaic power generation system 200 and reducing material consumption.

In a possible implementation, the first node in the conversion circuit 203 is coupled to a positive input terminal of the DC/AC conversion circuit, and the second node in the conversion circuit 203 is coupled to a negative input terminal of the DC/AC conversion circuit 204, so that the conversion circuit 203 can further transfer the output voltage of the first group of photovoltaic arrays and/or the output voltage of the second group of photovoltaic arrays to the DC/AC conversion circuit 204. For example, the conversion circuit 203 may transfer a cascaded output voltage of the first group of photovoltaic arrays 201 and the second group of photovoltaic arrays 202 to the DC/AC conversion circuit 204, so that the DC/AC conversion circuit 204 can convert the cascaded output voltage to obtain a grid-connected voltage, and transmit the grid-connected voltage to a power distribution system in the photovoltaic power generation system 200. For another example, the conversion circuit 203 may transfer the output voltage of the first group of photovoltaic arrays 201 to the DC/AC conversion circuit 204, so that the DC/AC conversion circuit 204 can convert the output voltage of the first group of photovoltaic arrays 201 to obtain a grid-connected voltage, and transmit the grid-connected voltage to the power distribution system in the photovoltaic power generation system 200. For still another example, the conversion circuit 203 may transfer the output voltage of the second group of photovoltaic arrays 202 to the DC/AC conversion circuit 204, so that the DC/AC conversion circuit 204 can convert the output voltage of the second group of photovoltaic arrays 202 to obtain a grid-connected voltage, and transmit the grid-connected voltage to the power distribution system in the photovoltaic power generation system 200. A specific coupling manner may include one or more of manners such as indirect connection through a component such as a switch component, a current limiting component, or a protection component, and direct connection through a cable. This is not specifically limited in this embodiment of this application.

In this embodiment of this application, the conversion circuit 203 is disposed between the photovoltaic array and the DC/AC conversion circuit 204 in the photovoltaic power generation system 200, and two groups of photovoltaic arrays are cascaded by using the conversion circuit 203, to effectively increase an output voltage of the conversion circuit 203 and decrease an output current, so that a cable with a small diameter specification can also meet a current transmission requirement, to resolve problems of costs and a loss of a cable. In addition, the voltage to earth at the intermediate node is adjusted to the first preset value, so that both the absolute value of the voltage to earth of the first group of photovoltaic arrays 201 and the absolute value of the voltage to earth of the second group of photovoltaic arrays 202 are less than the first threshold. Therefore, the photovoltaic power generation system 200 can use a power distribution component (for example, a cable) with an existing voltage withstanding specification, thereby reducing material consumption of the photovoltaic power generation system, reducing costs of the photovoltaic power generation system 200, and effectively improving a power station benefit.

The following describes specific implementations of components in the photovoltaic power generation system 200.

In this embodiment of this application, each photovoltaic array in the first group of photovoltaic arrays 201 and the second group of photovoltaic arrays 202 may be specifically formed by connecting a plurality of photovoltaic panels in series, or may be formed by connecting a plurality of photovoltaic panels first in series and then in parallel, or may be formed by connecting a plurality of photovoltaic panels first in parallel and then in series, or may be formed by connecting a plurality of photovoltaic panels in series or in parallel after an optimizer and a shutdown device are connected to an output terminal of each of the plurality of photovoltaic panels. This is not specifically limited in this application.

For ease of understanding, the following provides a specific example of a structure of the first photovoltaic array. FIG. 3 is a schematic diagram of a structure of a first photovoltaic array according to an embodiment of this application. As shown in FIG. 3, a photovoltaic module 1-1, a photovoltaic module 1-2, ..., and a photovoltaic module 1-a are connected in series, a photovoltaic module 2-1, a photovoltaic module 2-2, ..., and a photovoltaic module 2-b are connected in series, and then two groups of photovoltaic modules obtained after serial connection are connected in parallel, to obtain the first photovoltaic array. It should be understood that in actual application, the first photovoltaic array may be obtained by connecting a plurality of groups of photovoltaic modules first in series and then in parallel. FIG. 3 is merely an example, and does not limit the first photovoltaic array.

In this embodiment of this application, the DC/AC conversion circuit 204 may include a direct-current port (that is, the positive input terminal and the negative input terminal of the DC/AC conversion circuit 204 described above), an alternating-current port, and an alternating-current to direct-current converter. An input terminal of the alternating-current to direct-current converter is connected to the direct-current port, an output terminal of the alternating-current to direct-current converter is connected to the alternating-current port, and the alternating-current port is connected to a power distribution system (for example, a power grid). The alternating-current to direct-current converter may be configured to: receive a direct current from the connected direct-current port, convert the received direct current into an alternating current, and transmit the alternating current to the power distribution system (for example, the power grid) by using the alternating-current port.

Specifically, refer to FIG. 4, the alternating-current to direct-current converter may include an H-bridge circuit. Two terminals of a first bridge arm and two terminals of a second bridge arm in the H-bridge circuit may be jointly used as input terminals (that is, a terminal A and a terminal B in FIG. 4) of the alternating-current to direct-current converter and are connected to the direct-current port. A midpoint of the first bridge arm and a midpoint of the second bridge arm in the H-bridge circuit may be used as output terminals (that is, a terminal C and a terminal D in FIG. 4) of the alternating-current to direct-current converter and are connected to the alternating-current port.

In this embodiment of this application, the conversion circuit 203 may be implemented in a plurality of manners.

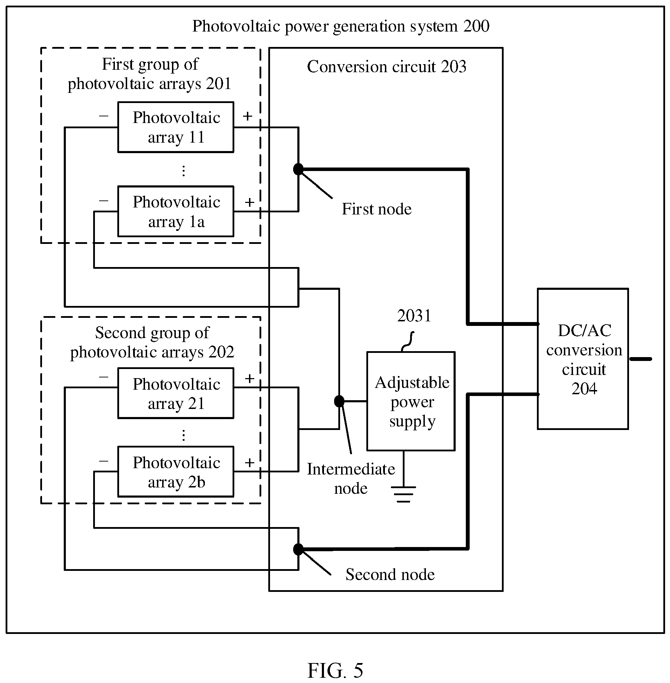

For example, as shown in FIG. 5, the conversion circuit 203 may include an adjustable power supply 2031. A first terminal of the adjustable power supply 2031 is connected to the intermediate node, and a second terminal is connected to a ground wire, so that the conversion circuit 203 can specifically adjust the voltage to earth at the intermediate node in the following manner: When determining that the voltage to earth at the intermediate node in the conversion circuit 203 is not within the first preset range, the adjustable power supply 2031 adjusts the voltage to earth at the intermediate node to the first preset value, so that the absolute value of the voltage to earth of the first group of photovoltaic arrays is less than the first threshold, and the absolute value of the voltage to earth of the second group of photovoltaic arrays is less than the first threshold.

In a possible implementation, a process in which the adjustable power supply 2031 adjusts the voltage to earth at the intermediate node may be specifically injecting a target voltage value into the intermediate node, so that the adjusted voltage to earth at the intermediate node is the first preset value.

The target voltage value may be determined in a plurality of manners, which include but are not limited to the following manners.

Manner 1: The target voltage value is the first preset value. The adjustable power supply 2031 obtains a current value of the voltage to earth at the intermediate node, and adjusts the value until the value is the target voltage value, so that the voltage to earth at the intermediate node is the first preset value. This manner is applicable to a scenario in which an adjustment capability of the adjustable power supply 2031 is sufficient and sampling precision of the adjustable power supply 2031 is accurate.

Manner 2: The adjustable power supply 2031 determines a current fault type of the photovoltaic power generation system 200; obtains a table of mapping between a first preset value and a fault type of the photovoltaic power generation system; determines, based on the mapping table, a first preset value corresponding to the current fault type; and then determines, based on the first preset value, a target voltage value corresponding to the current fault. In this way, a first preset value is set for each fault, so that the voltage to earth at the intermediate node can be flexibly adjusted, thereby more effectively ensuring safe running of the photovoltaic power generation system 200.

There are a plurality of fault types, for example, an internal fault of the conversion circuit 203 (for example, the voltage to earth at the intermediate node is not within a first range), or a fault of a specific component in the conversion circuit 203. Specific values of first preset values corresponding to different fault types may be the same or may be different. This is not specifically limited in this embodiment of this application.

It should be noted that when the voltage to earth at the intermediate node in the conversion circuit 203 is within the first preset range, another fault may still occur in the photovoltaic power generation system 200. For example, a cable between the conversion circuit 203 and the first group of photovoltaic arrays 201 or the second group of photovoltaic arrays 202 is faulty. For another example, a grounding fault occurs inside the conversion circuit 203. For still another example, a person is in contact with a cable or the conversion circuit 203. These faults cause a residual current in the conversion circuit 203.

To protect the photovoltaic power generation system 200 when the foregoing faults occur in the photovoltaic power generation system 200, a residual current detection (residual current device, RCD) circuit may be further disposed in the conversion circuit 203 provided in this embodiment of this application. A specific product form of the RCD circuit may be a magnetic ring or the like. Because each circuit node in the conversion circuit 203 may have a residual current, there are a plurality of specific implementations of the RCD circuit in the conversion circuit 203, including but not limited to the following manners.

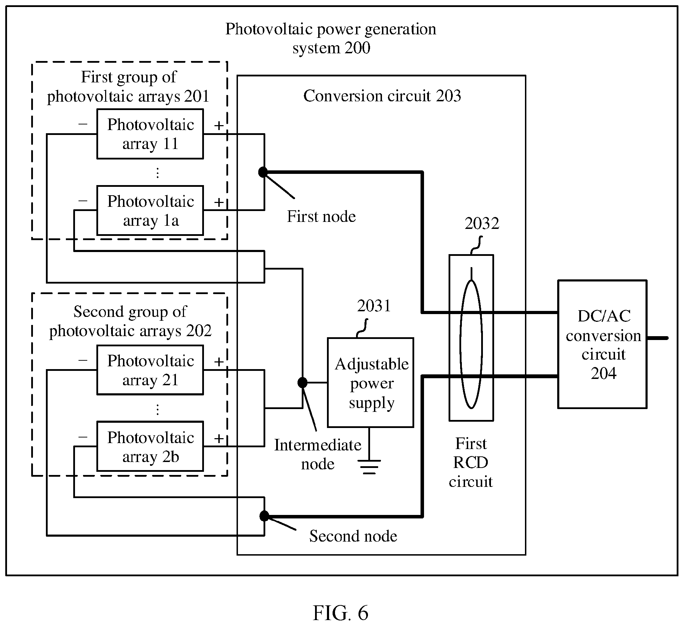

Manner 1: Refer to FIG. 6, in FIG. 6, a first RCD circuit 2032 is disposed in the conversion circuit 203, and the first RCD circuit 2032 is coupled to the first node and the second node. The first RCD circuit 2032 may detect a first residual current of the conversion circuit 203, so that the adjustable power supply 2031 can adjust the voltage to earth at the intermediate node to the first preset value when determining that the first residual current is not within a second preset range.

In Manner 1, through detection of the first RCD circuit 2032, when a residual current at an output terminal of the conversion circuit 203 is not within the second preset range, the adjustable power supply 2031 may adjust the voltage to earth at the intermediate node, so that the voltage to earth at the intermediate node is kept at a stable low voltage, to ensure stable grounding of the photovoltaic power generation system to avoid fault diffusion in the conversion circuit 203, thereby more effectively enabling the photovoltaic power generation system 200 to run safely.

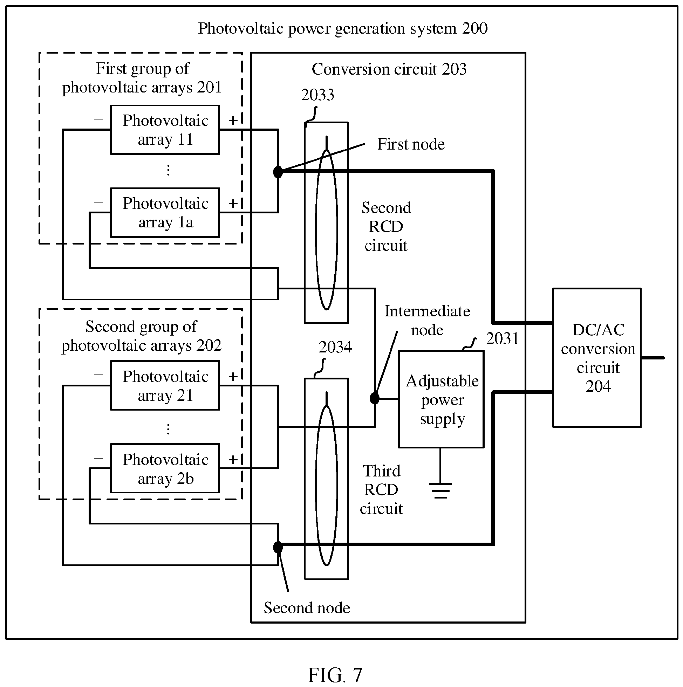

Manner 2: Refer to FIG. 7, in FIG. 7, a second RCD circuit 2033 and a third RCD circuit 2034 are disposed in the conversion circuit 203. The second RCD circuit 2033 is separately coupled to the first node and the negative terminal of each first photovoltaic array, and the third RCD circuit 2034 is separately coupled to the positive terminal of each second photovoltaic array and the second node, so that the second RCD circuit 2033 can detect a second residual current of the first group of photovoltaic arrays 201, and the third RCD circuit 2034 can detect a third residual current of the second group of photovoltaic arrays 202. In this way, when determining that the second residual current or the third residual current is not within a third preset range, the adjustable power supply 2031 can adjust the voltage to earth at the intermediate node to the first preset value.

In Manner 2, one RCD circuit is disposed for each group of photovoltaic arrays, so that when a residual current of any group of photovoltaic arrays is not within the third preset range, the adjustable power supply 2031 can adjust the voltage to earth at the intermediate node, thereby more effectively ensuring stable running of the photovoltaic power generation system and effectively improving a protection capability of the photovoltaic power generation system.

It should be noted that, to resolve a PID effect of the photovoltaic array in the photovoltaic power generation system 200, a PID switch may be further disposed in the conversion circuit 203 in this embodiment of this application. A specific product form of the PID switch may be a common switch, or may be a relay switch. This is not specifically limited in this embodiment of this application.

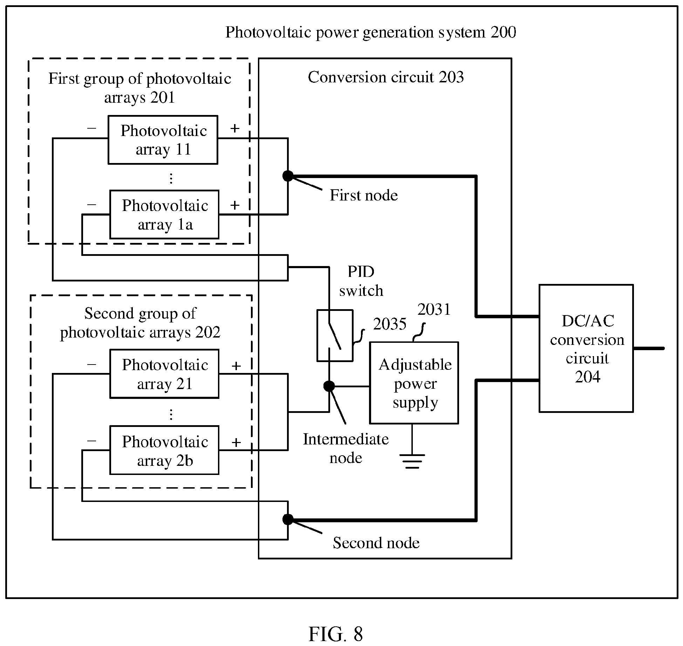

For example, refer to FIG. 8, a PID switch 2035 is disposed in the conversion circuit 203 in FIG. 8. A first terminal of the PID switch 2035 may be connected to the negative terminal of each first photovoltaic array in the first group of photovoltaic arrays 201, and a second terminal is connected to the positive terminal of each second photovoltaic array in the second group of photovoltaic arrays 202 by using the intermediate node, and is connected to the adjustable power supply 2031 by using the intermediate node. In this way, in a preset time period, the adjustable power supply 2031 can control the PID switch 2035 to be turned off, and adjust a voltage to earth of the positive terminal of each second photovoltaic array in the second group of photovoltaic arrays 202 to a second preset value. The preset time period may be a time period in which the first group of photovoltaic arrays and the second group of photovoltaic arrays do not work, for example, a night time period in which the first group of photovoltaic arrays 201 and the second group of photovoltaic arrays 202 do not generate electric energy.

Optionally, the second preset value may be any value greater than 0, or may be a fixed value greater than 0. This is not specifically limited in this embodiment of this application.

For example, the second preset value is 750 V If the output voltage of the second group of photovoltaic arrays 202 is 600 V, from two o'clock to four o'clock in the morning, the adjustable power supply 2031 may control the PID switch 2035 to be turned off, and the adjustable power supply 2031 adjusts the voltage to earth of the positive terminal of each second photovoltaic array in the second group of photovoltaic arrays 202 to 750 V, so that a voltage to earth of the negative terminal of each second photovoltaic array in the second group of photovoltaic arrays 202 is 150 V (that is, the voltage to earth of the negative terminal of each second photovoltaic array is adjusted to be greater than zero).

In this instance, the adjustable power supply 2031 controls on/off of the PID switch 2035 to adjust the voltage to earth of the positive terminal of each second photovoltaic array in the second group of photovoltaic arrays 202, so as to repair a PID effect of the second group of photovoltaic arrays 202, thereby improving an energy yield of the photovoltaic power generation system.

In a possible embodiment, the adjustable power supply 2031 may further receive a control instruction, and adjust the voltage to earth at the intermediate node to the first preset value in response to the control instruction. The control instruction may be from an external device.

For example, the conversion circuit 203 is further communicatively connected to the DC/AC conversion circuit 204. When the DC/AC conversion circuit 204 is faulty, the DC/AC conversion circuit 204 may further send a control instruction to the conversion circuit 203, so that the adjustable power supply 2031 receives the control instruction, and adjusts the voltage to earth at the intermediate node in the conversion circuit 203 to the first preset value based on the control instruction. In this way, the voltage to earth at the intermediate node can be kept at a stable low voltage, so that the photovoltaic power generation system runs stably, thereby effectively expanding a protection capability of the photovoltaic power generation system.

It should be understood that a specific product implementation of the conversion circuit 203 may be one independent device, or may be two or more independent devices. A specific device implementation may be a combiner box, an inverter, or a direct-current converter. This is not specifically limited in this embodiment of this application. In this way, integration diversity of the conversion circuit 203 is effectively improved, so that different manufacturers can design the conversion circuit 203 based on different requirements of the manufacturers, and the conversion circuit 203 is more widely applied.

It should be understood that the foregoing embodiments or the implementations in the embodiments may be used in combination.

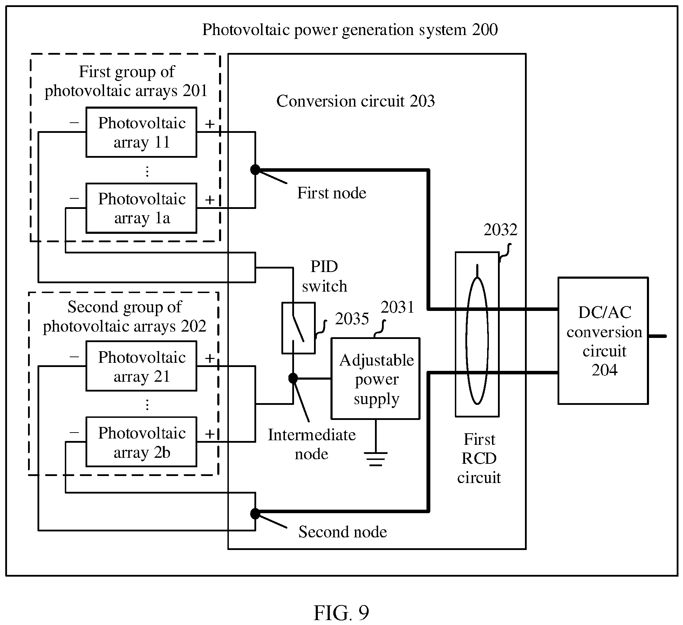

For example, as shown in FIG. 9, both the PID switch 2035 and the first RCD circuit 2032 may be disposed in the conversion circuit 203. In this way, the adjustable power supply 2031 can adjust the voltage to earth at the intermediate node to the first preset value when the voltage to earth at the intermediate node in the conversion circuit 203 is out of the first preset range, or the first residual current of the conversion circuit 203 detected by the first RCD circuit 2032 is out of the second preset range, so that the entire photovoltaic power generation system runs stably, thereby reducing costs of the photovoltaic power generation system. In addition, the adjustable power supply 2031 may further control on/off of the PID switch 2035 to adjust the voltage to earth of the positive terminal of each second photovoltaic array in the second group of photovoltaic arrays 202, so as to repair a PID effect of the second group of photovoltaic arrays 202, thereby improving an energy yield of the photovoltaic power generation system 200.

For another example, the PID switch 2035, the second RCD circuit 2033, and the third RCD circuit 2034 may alternatively be disposed in the conversion circuit 203 simultaneously. In this way, the adjustable power supply 2031 can adjust the voltage to earth at the intermediate node to the first preset value when the voltage to earth at the intermediate node in the conversion circuit 203 is out of the first preset range, or the second residual current of the first group of photovoltaic arrays 201 that is detected by the second RCD circuit 2033 is out of the third preset range, or the third residual current of the second group of photovoltaic arrays 202 that is detected by the third RCD circuit 2034 is out of the third preset range, so that the entire photovoltaic power generation system runs stably, thereby reducing costs of the photovoltaic power generation system. In addition, the adjustable power supply 2031 may further control on/off of the PID switch 2035 to adjust the voltage to earth of the positive terminal of each second photovoltaic array in the second group of photovoltaic arrays 202, so as to repair a PID effect of the second group of photovoltaic arrays 202, thereby improving an energy yield of the photovoltaic power generation system 200.

Although some embodiments of this application have been described, persons skilled in the art can make other changes and modifications to these embodiments once they learn the basic inventive concept. Therefore, the appended claims are intended to be construed as including the preferred embodiments and all changes and modifications falling within the scope of this application.

Apparently, persons skilled in the art can make various modifications and variations to this application without departing from the spirit and scope of this application. This application is intended to include these modifications and variations made to this application provided that they fall within the scope of the claims of this application and an equivalent technology thereof. Apparently, persons skilled in the art can make various modifications and variations to this application without departing from the spirit and scope of this application. This application is intended to include these modifications and variations made to this application provided that they fall within the scope of the claims of this application and an equivalent technology thereof.

## Claims

1. A photovoltaic power generation system, comprising a conversion circuit and a direct-current to alternating-current DC/AC conversion circuit, wherein the conversion circuit comprises a first node, a second node, and an intermediate node, the first node is coupled to a positive input terminal of the direct-current to alternating-current conversion circuit, and the second node is coupled to a negative input terminal of the DC/AC conversion circuit;
a first group of photovoltaic arrays in the photovoltaic power generation system comprises at least one first photovoltaic array, a second group of photovoltaic arrays in the photovoltaic power generation system comprises at least one second photovoltaic array, positive terminals of the first photovoltaic arrays are mutually coupled to the first node, negative terminals of the first photovoltaic arrays are mutually coupled to the intermediate node, positive terminals of the second photovoltaic arrays are mutually coupled to the intermediate node, and negative terminals of the second photovoltaic arrays are mutually coupled to the second node;
the conversion circuit is configured to: adjust a voltage to earth at the intermediate node to a first preset value when determining that the voltage to earth at the intermediate node is not within a first preset range, so that an absolute value of a voltage to earth of the first group of photovoltaic arrays is less than a first threshold, and an absolute value of a voltage to earth of the second group of photovoltaic arrays is less than the first threshold; and transfer output voltages of the first group of photovoltaic arrays and the second group of photovoltaic arrays to the DC/AC conversion circuit; and
the DC/AC conversion circuit is configured to: convert the output voltage of the first group of photovoltaic arrays and/or the output voltage of the second group of photovoltaic arrays, to obtain an alternating-current voltage, and output the alternating-current voltage to a load connected to the photovoltaic power generation system.

2. The photovoltaic power generation system according to claim 1, wherein the conversion circuit further comprises an adjustable power supply, a first terminal of the adjustable power supply is connected to the intermediate node, and a second terminal is connected to a ground wire; and
the adjustable power supply is configured to adjust the voltage to earth at the intermediate node to the first preset value when determining that the voltage to earth at the intermediate node is not within the first preset range, so that the absolute value of the voltage to earth of the first group of photovoltaic arrays is less than the first threshold, and the absolute value of the voltage to earth of the second group of photovoltaic arrays is less than the first threshold.

3. The photovoltaic power generation system according to claim 2, wherein the conversion circuit further comprises a first residual current detection RCD circuit, and the first RCD circuit is coupled to the first node and the second node;
the first RCD circuit is configured to detect a first residual current of the conversion circuit; and
the adjustable power supply is further configured to adjust the voltage to earth at the intermediate node to the first preset value when determining that the first residual current is not within a second preset range.

4. The photovoltaic power generation system according to claim 2, wherein the conversion circuit further comprises a second RCD circuit and a third RCD circuit;
the second RCD circuit is coupled to the first node and the negative terminal of each first photovoltaic array, and the third RCD circuit is coupled to the positive terminal of each second photovoltaic array and the second node;
the second RCD circuit is configured to detect a second residual current of the first group of photovoltaic arrays;
the third RCD circuit is configured to detect a third residual current of the second group of photovoltaic arrays; and
the adjustable power supply is further configured to adjust the voltage to earth at the intermediate node to the first preset value when determining that the second residual current or the third residual current is not within a third preset range.

5. The photovoltaic power generation system according to any one of claims 2 to 4, wherein the conversion circuit further comprises a potential induced degradation PID switch, a first terminal of the PID switch is connected to the negative terminal of each first photovoltaic array, and a second terminal is connected to the intermediate node and the positive terminal of each second photovoltaic array; and
the adjustable power supply is further configured to: in a preset time period, control the PID switch to be turned off, and adjust a voltage to earth of the positive terminal of each second photovoltaic array to a second preset value, wherein the preset time period is a time period in which the first group of photovoltaic arrays and the second group of photovoltaic arrays do not work.

6. The photovoltaic power generation system according to any one of claims 2 to 5, wherein the adjustable power supply is further configured to:
receive a control instruction, and adjust the voltage to earth at the intermediate node to the first preset value in response to the control instruction.

7. The photovoltaic power generation system according to any one of claims 1 to 6, wherein the first preset value is within the first preset range.

8. A conversion circuit, comprising a first node, a second node, an intermediate node, and an adjustable power supply, wherein
the first node is configured to be separately coupled to a positive input terminal of a direct-current to alternating-current DC/AC conversion circuit in a photovoltaic power generation system and a positive terminal of at least one first photovoltaic array in a first group of photovoltaic arrays in the photovoltaic power generation system;
the second node is configured to be separately coupled to a negative input terminal of the DC/AC conversion circuit and a negative terminal of at least one second photovoltaic array in a second group of photovoltaic arrays in the photovoltaic power generation system;
the intermediate node is configured to be separately coupled to a negative terminal of each first photovoltaic array and a positive terminal of each second photovoltaic array; and
a first terminal of the adjustable power supply is connected to the intermediate node, a second terminal is connected to a ground wire, and the adjustable power supply is configured to adjust a voltage to earth at the intermediate node to a first preset value when determining that the voltage to earth at the intermediate node is not within a first preset range, so that an absolute value of a voltage to earth of the first group of photovoltaic arrays is less than a first threshold, and an absolute value of a voltage to earth of the second group of photovoltaic arrays is less than the first threshold.

9. The conversion circuit according to claim 8, further comprising a first RCD circuit, wherein the first RCD circuit is coupled to the first node and the second node;
the first RCD circuit is configured to detect a first residual current of the conversion circuit; and
the adjustable power supply is further configured to adjust the voltage to earth at the intermediate node to the first preset value when determining that the first residual current is not within a second preset range.

10. The conversion circuit according to claim 8, further comprising a second RCD circuit and a third RCD circuit, wherein
the second RCD circuit is coupled to the first node and the negative terminal of each first photovoltaic array, and the third RCD circuit is coupled to the positive terminal of each second photovoltaic array and the second node;
the second RCD circuit is configured to detect a second residual current of the first group of photovoltaic arrays;
the third RCD circuit is configured to detect a third residual current of the second group of photovoltaic arrays; and
the adjustable power supply is further configured to adjust the voltage to earth at the intermediate node to the first preset value when determining that the second residual current or the third residual current is not within a third preset range.

11. The conversion circuit according to any one of claims 8 to 10, further comprising a potential induced degradation PID switch, wherein a first terminal of the PID switch is configured to connect to the negative terminal of each first photovoltaic array, and a second terminal is configured to connect to the intermediate node and the positive terminal of each second photovoltaic array; and
the adjustable power supply is further configured to: in a preset time period, control the PID switch to be turned off, and increase a voltage to earth of the positive terminal of each second photovoltaic array to a second preset value, wherein the preset time period is a time period in which the first group of photovoltaic arrays and the second group of photovoltaic arrays do not work.

12. The conversion circuit according to any one of claims 8 to 11, wherein the adjustable power supply is further configured to:
receive a control instruction, and adjust the voltage to earth at the intermediate node to the first preset value in response to the control instruction.

13. The conversion circuit according to any one of claims 8 to 12, wherein the first preset value is within the first preset range.

14. The conversion circuit according to any one of claims 8 to 13, wherein the conversion circuit is integrated into an inverter, a combiner box, or a direct-current converter in the photovoltaic power generation system.
